# EUROPEAN PATENT APPLICATION

(11) **EP 2 256 069 A1**
(43) Date of publication of application: **01.12.2010**
(21) Application number: 09007252.1
(22) Date of filing: 29.05.2009
(51) Int. Cl.: B65G 17/08

(54) **Conveyor chain for a radiographic inspection system and radiographic inspection system**

(71) Applicant: Mettler-Toledo Safeline X-Ray Limited, Royston, Herts SG8 5HN (GB)
(72) Inventor: King, Nigel John, Langford Bedfordshire (GB)
(74) Representative: Schilling, Doris

(57) **Abstract**

A conveyor chain (11) for a radiographic inspection system is composed of rigid segments or links (12) which extend over the entire width of the conveyor chain (11) and are joined together in a closed loop. Each segment (12) is coupled by connector elements (16a, 16b, 17a, 17b, 19) to a following segment and a preceding segment, and the segments and connector elements are configured in such a way that neighboring segments can flex against each other substantially from a straight line to a convex angle in relation to the chain loop, so that the conveyor chain (11) is able to conform to conveyor rollers or sprockets (22), but is essentially resistant to flexing in the opposite direction. The segments (12) are configured at least in part as plates of uniform thickness and density and the connector elements are arranged on the segments in such a way that at least one continuous, materially homogenous area (13) of uniform thickness and density is formed in the conveyor chain.

## Description

The invention relates to a conveyor belt, more specifically a conveyor chain that is composed of a multitude of rigid segments or links which are connected to each other in a closed loop wherein each link is articulately hinged to a following link and a preceding link. The invention further relates to a radiographic inspection system which includes the conveyor chain as a component.

The intended use for this endless conveyor chain is in an inspection system in which the objects under inspection are transported by a conveyor belt or conveyor chain through an X-ray machine or other radiographic scanner system, for example for the detection of foreign bodies in bottled or canned food and beverage products. Of particular concern is the detection of metal and glass fragments in liquid products. Due to their higher density relative to the liquid, such foreign bodies will collect at the bottom of the container. Furthermore, if the container has a domed bottom, the foreign bodies will tend to settle at the perimeter where the bottom meets the sidewall of the container. It is therefore very important for the radiographic scanner system to be configured and arranged in relation to the conveyor chain in such a way that the entire inside bottom surface of each container is covered by the scan. Consequently, it is necessary to use a scanner arrangement where at least part of the radiation passes through the bottom of the container and therefore also through the area of the conveyor belt or conveyor chain on which the container is standing. The rays used for the inspection may for example originate from a source located above the belt or chain, pass at an oblique angle through the sidewall into the container, exit through the container bottom and pass through the belt, to be received by a camera system which is connected to an image-processing system. If the radiographic inspection system is an X-ray system, the rays can be received for example by an x-ray image intensifier and camera, or by an X-ray line array sensor, both of which then pass a signal to the image processing system.

A state-of-the-art inspection system of the generic type addressed by the present invention is described for example in U.S. 7,106,827 B2. According to this reference, the transport device for the containers can be a customary link-chain conveyor with plastic chain links or, if the chain links interfere on the X-ray image, a belt conveyor can be used in which the containers are transported by means of two laterally engaging belts.

To the extent that conveyor belts are used as transport devices in radiographic inspection systems, they are in most cases fabric polymer belts. This type of conveyor has the advantage that the quality of the X-ray image is least affected by it, due to the constant thickness and the uniformity of the belt. However, there is strong resistance to the use of fabric belts in the bottling and canning industry, because they are easily damaged and wear out rapidly. In comparison, conveyor chains consisting of rigid plastic elements (typically of acetal resin or polypropylene) that are linked together in an endless loop are much stronger and less easily damaged by hard metal or glass containers. Conveyor chains are also easier to replace or repair than belts, because the chain can be opened by removing the hinge pins by which the modular elements of the chain are linked together. Finally, conveyor chains can be designed to be self-tracking and to run flush with the side of the conveyor structure. This last characteristic is important, because it allows products to be easily transferred sideways between laterally adjacent conveyors.

On the other hand, as mentioned in U.S. 7,106,827 B2, the use of customary chain conveyors with plastic chain links is problematic in radiographic inspection systems, because the chain links can interfere with the X-ray image. For example in the state-of-the-art conveyor chain with plastic chain links which is described in EP 0 990 602 A1, the transport surface of each link has a metallic coating or sheet metal overlay as protection against abrasive wear, and the hinge pins are made of metal. In another state-of-the-art conveyor chain which is described in EP 0 597 455 A1, the transport surface consists of plastic plate elements that are fastened to metallic link elements which form the actual chain. In the foregoing examples of the existing state of the art, the metallic parts alone would make these conveyor chains unsuitable for a radiographic inspection system. In addition, the structured surface topography of the underside of the plastic conveyor chain segments as well as the open gaps in the transition areas between neighboring segments which are evident from the drawings in the cited references run counter to the requirement of a homogeneous transport surface of uniform thickness and density, and thus uniform transmissivity to radiation, which is necessary to produce an optimal radiographic image.

Therefore, the object of this invention is to provide a conveyor for a radiographic inspection system that combines the advantages of uniform thickness and density of a fabric-backed polymer belt with the stability and wear-resistance of a chain of articulately connected rigid elements. A further object of the invention is to provide a radiographic inspection system which contains this conveyor as a component.

This objective is met by a conveyor chain according to the independent claims. Further embodiments and detail aspects of the invention are presented in the dependent claims.

A conveyor chain according to the invention is composed of a multitude of rigid segments which extend over the entire width of the conveyor chain and which in the lengthwise direction of the chain are connected together in a closed loop. Each segment is articulately coupled by connector elements to a next-following segment and a preceding segment in such a way that neighboring segments can flex against each other from a substantially straight line to a convex angle in relation to the chain loop, so that the conveyor chain is able to conform to conveyor rollers but is essentially resistant to flexing in the opposite direction. Specifically in accordance with the invention, the segments are configured at least in part as plates of uniform thickness and density and the connector elements are arranged on the segments in such a way that at least one continuous, materially homogenous transport area of uniform thickness and density is formed in the conveyor chain.

This continuous, materially homogenous transport area of uniform thickness and density is a central aspect of the invention, as it ensures that the part of the conveyor which supports the articles under inspection has a uniform transmissivity for the scanning radiation.

The connector elements through which the segments of the conveyor chain are articulately joined together are preferably configured as hinges which are arranged in pairs in the outside border areas of the conveyor chain, so that the continuous, materially homogenous transport area is not traversed by the hinges and runs as a continuous band along a median area of the conveyor chain between said outside border areas.

The connector elements, in particular the hinges are preferably arranged on the underside, i.e. the inside surface of the conveyor chain loop, so that the outward-facing surface or transport surface of the conveyor chain loop is flat and unobstructed, which facilitates for example the sideways transfer of objects from one conveyor chain to another.

In an exemplary embodiment of the invention the segments of the conveyor chain are made of a synthetic material that is transmittant to high-energy electromagnetic radiation and at the same time rigid and wear-resistant. Two commonly available materials that meet these requirements are acetal resin and polypropylene, which are named here only as examples without implying any limitations in the choice of a suitable material. The hinge pins can likewise be made of a synthetic material, but since they are located outside the transport area, they could also be made of metal.

As one specific application, it is envisioned that the conveyor chain according to the invention will be used advantageously in an X-ray inspection system for food and beverage containers. However, as will be readily understood, the invention is not limited in its applicability by any specific spectral range of the electromagnetic radiation or by the nature of the objects being inspected.

In addition to the arrangement of the hinges in the outside border areas of the conveyor chain, it is a further central aspect of the invention that the segments of the conveyor chain overlap each other in such a way that the conveyor chain presents no gaps or areas of lesser or higher transmissivity to the incident radiation. In other words, the materially homogeneous transport area forms at least one continuous gapless band of uniform transmissivity in the conveyor chain.

In a preferred embodiment of the conveyor chain according to the invention, the cross-sectional profile of the segments in a plane that extends perpendicular to the transport surface and in the lengthwise direction of the conveyor chain is parallelogram-shaped, so that mutually adjoining sides of neighboring segments are slanted at an oblique angle relative to the lengthwise direction of the conveyor chain. At least for radiation directed in a plane that is orthogonal to the lengthwise direction of the conveyor chain, the segments therefore present an overlap at the slanted joints with no change in transmissivity when a joint passes through the curtain of radiation.

As an alternative to the foregoing embodiment where neighboring segments abut each other in a slanted plane, the conveyor chain segments in another embodiment of the invention have mutually adjoining sides with complementary projecting and receding surface profiles, for example convex-curved and concave-curved, so that the segments overlap each other through a mutual engagement between the complementary surface profiles providing uniform transmissivity of electromagnetic radiation, irrespective of the direction of incidence.

According to another preferred embodiment of the conveyor chain according to the invention, the cross-sectional profile of the segments in a plane that extends perpendicular to the transport surface and in the lengthwise direction of the conveyor chain is rectangular.

Advantageously the curtain of scanning radiation extends in a plane that is inclined at an oblique angle to the transport surface and intersects the latter along a line that runs perpendicular to the transport direction. For the obliquely directed radiation, the segments therefore effectively present an overlap at the joints, so that there is no change in transmissivity when a joint passes through the inclined curtain of radiation.

A radiographic inspection system according to the invention includes the conveyor chain of the foregoing description, wherein the conveyor chain serves to transport objects under inspection through a curtain of electromagnetic radiation, which in an exemplary embodiment may extend in a plane that intersects the plane of the transport surface of the conveyor chain along a line that runs perpendicular to the transport direction. The system is equipped with at least one radiation emitter that is installed at a lateral position above the plane of the transport surface of the conveyor and at least one radiation receiver that is installed at a lateral position below the plane of the transport surface of the conveyor.

A preferred embodiment of this radiographic inspection system is equipped with two radiation emitters and two corresponding radiation receivers which are installed at opposite sides of the conveyor.

The conveyor chain according to the invention is described hereinafter through examples which are illustrated in the attached drawings, wherein
- Figure 1: shows a cross-sectional view of a conveyor chain according to the invention, with a container traveling on the conveyor and two radiation beams of a radiographic inspection system traversing the container and the conveyor chain;
- Figure 2: shows a side view of the conveyor chain and container of Figure 1;
- Figure 3: shows a perspective view of the conveyor chain and container of Figures 1 and 2;
- Figure 4: represents a side view of the conveyor chain of Figures 1 to 3 with drive sprocket and sweeper brush; and
- Figures 5 to 7: represent further embodiments of the conveyor chain according to the invention.

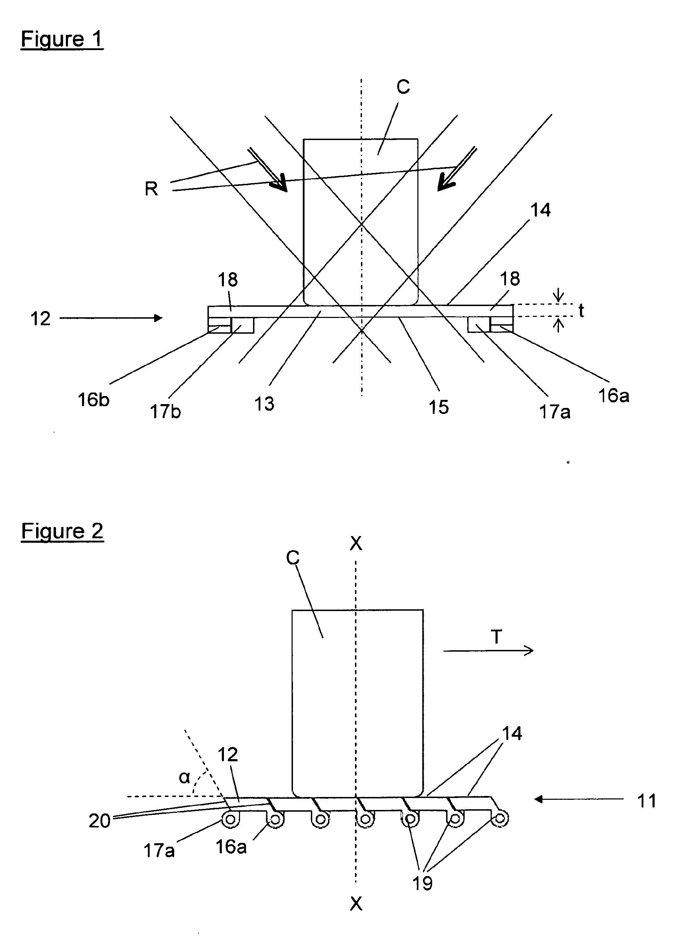

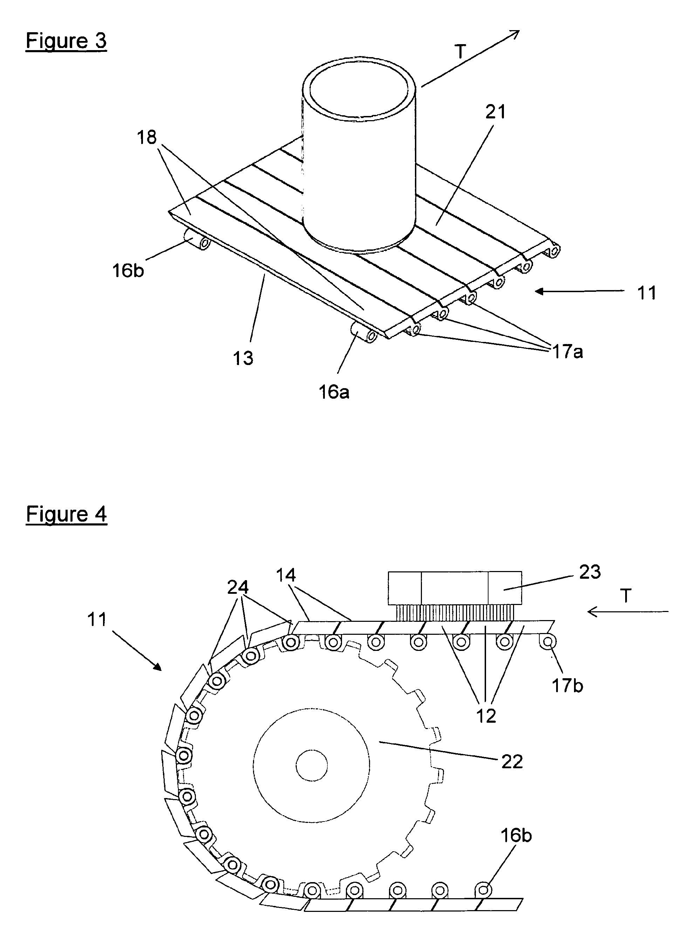

A preferred embodiment of a conveyor chain 11 according to the invention is shown in four different views in Figures 1 to 4. Viewed in the direction of movement of the conveyor chain, Figure 1 schematically represents a conveyor chain segment 12 with a container C at the moment when the container C passes through the beams of a scanning radiation R of a radiographic inspection system (wherein the latter is not shown in the drawing). The conveyor chain segment 12 has a flat topside 14 forming part of the transport surface 21 (see Figure 3) of the conveyor chain 11. The mid-section 13 of the conveyor chain segment 12 which is traversed by the scanning radiation R is of a uniform thickness t. Hinge bearings are arranged on the underside 15 of the conveyor chain segment 12 in the outside border areas 18 that are not traversed by the scanning radiation R. The part of the underside 15 which covers the mid-section 13 is flat and parallel to the topside 14. Relative to the travel direction T (see Figures 2 to 4) of the conveyor belt 11, a first pair of hinge bearings 16a, 16b is arranged at the leading edge and a second pair of hinge bearings 17a, 17b is arranged at the trailing edge of each conveyor chain segment 12.

Figure 2 shows a section of six segments 12 of the conveyor chain 11, illustrating in particular the arrangement of the hinge bearings 16a, 17a on the right side of the segments 12 (relative to the travel direction T of the conveyor chain) and of the hinge pins 19 connecting the hinge bearings 16a, 17a to each other. Also apparent is the parallelogram-shaped cross-sectional profile of the segments 12, with the mutually abutting sides 20 of the segments inclined at an oblique angle α relative to the flat topsides 14 of the segments 12 which form the transport surface. This angled position of the mutually abutting sides 20 of the segments, also referred to herein as an overlap between neighboring segments, has the effect that for scanning rays whose paths run in a plane represented for example by the line X-X, i.e. a plane that is perpendicular to the transport direction, the conveyor chain 11 presents a uniform material thickness t even at the joints between the segments 12. It should be noted however, that the plane of the scanning radiation (also referred to herein as the radiation curtain) does not necessarily have to be perpendicular to the transport direction but could be inclined relative to the transport surface at any oblique angle other than the angle α of the mutually abutting sides 20.

Figure 3 represents a perspective view of the same section of the conveyor chain 11 that is shown in the side view of Figure 2. Figure 3 illustrates in particular the flat transport surface 21 of the conveyor chain 11 with the materially homogeneous mid-section 13 of uniform thickness and density which extends as a continuous band between the border areas 18 in which the hinges 16a, 16b, 17a, 17b are arranged.

Figure 4 illustrates how the conveyor chain 11 according to the invention can be supported and driven by sprockets 22 which engage the hinges 16a, 16b, 17a, 17b. Also shown is a brush 23 which can be installed to sweep for example broken glass and debris off the conveyor before the chain moves around the sprocket where the joints 24 open up and then close again, which creates the risk that debris could become caught and compacted in the joints 24. Figure 4 further shows with particular clarity how the articulate connection between the segments 12 allows neighboring segments to flex against each other from a substantially straight line to a convex angle in relation to the chain loop, so that the conveyor chain 11 is able to conform to the sprocket 22 but essentially resists flexing in the opposite direction. As a result, for example, the straight section of the conveyor chain in the area of the brush 23 behaves like a rigid platform which cannot sag under the load of objects that are placed on it.

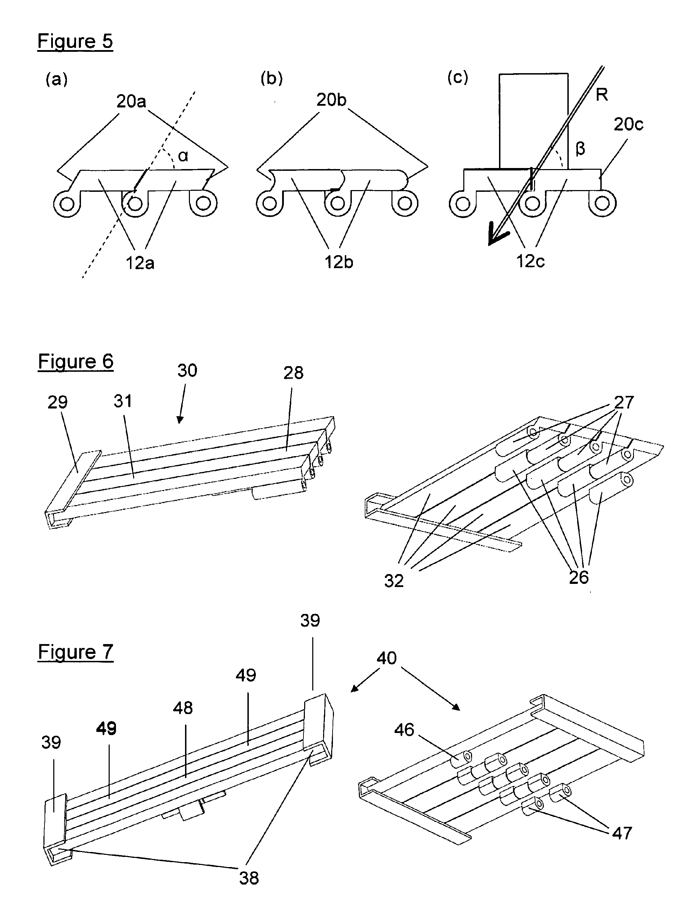

Figure 5 shows different ways in which the requirement of uniform transmissivity across the joint from one segment to the next can be achieved. In the preferred embodiment (a) where the conveyor chain segments 12a have a parallelogram-shaped profile, it was found that the objective of uniform transmissivity can be achieved comfortably if the mutually adjoining parallelogram sides 20a are inclined at an angle α of about 60°. However, depending on other parameters of the conveyor chain 11 such as for example the thickness t, a larger or smaller angle α may prove advantageous. It goes without saying that such variations of the angle α are entirely within the scope of the invention.

As an alternative to the preferred embodiment of Figure 5(a) where neighboring segments abut each other in a slanted plane, the conveyor chain segments 12b in the embodiment of Figure 5(b) have mutually adjoining sides 20b with complementary projecting and receding surface profiles, in this example convex-curved and concave-curved, so that the segments overlap each other through a mutual engagement between the complementary surface profiles.

Figure 5(c) shows the special case where the angle α equals 90°, i.e. the parallelogram is a rectangle. On the other hand, the curtain of scanning radiation R extends in a plane that is inclined relative to the transport surface at an angle β substantially smaller or larger than 90° and intersects the transport surface along a line that runs perpendicular to the transport direction. For the obliquely directed radiation R, the segments 12c therefore present in effect an overlap at the joints, so that there is no change in transmissivity when a joint travels through the inclined curtain of radiation.

As the embodiment of Figure 6 illustrates, the continuous, materially homogeneous area of the conveyor chain according to the invention can also be realized in a conveyor chain 30 where hinge bearings 26, 27 are arranged only along one border area 28 of the conveyor chain. The opposite border could in this case be guided in a guide channel 29 in order to keep the conveyor chain segments 32 in parallel alignment and to ensure that the transport surface 31 stays flat.

As yet a further possibility, the continuous, materially homogeneous area of the conveyor chain according to the invention can also be realized in a conveyor chain 40 as shown in Figure 7, where hinge bearings 46, 47 are arranged only along a median zone 48 of the conveyor chain 40 and both border areas 38 of the chain are guided in guide channels 39. This conveyor chain 40 has two continuous, materially homogeneous areas, i.e. two transport lanes 49 running parallel along either side of the median zone 48.

Although the invention has been described through a presentation of specific examples of embodiments, it is considered obvious that numerous further alternative embodiments can be created from a knowledge of the present invention, for example by combining features of the individual examples with each other and/or by interchanging individual features of the exemplary embodiments. For example, the variations of the profile shape of the conveyor chain segments which are illustrated in Figures 5(a) and 5(b) can be combined with a non-perpendicular angle of the curtain of radiation R as shown in Figure 5(c).

**List of reference symbols**

| | |
|---|---|
| 11, 30, 40 | conveyor chain according to the invention |
| 12, 12a, 12b, 12c, 32 | segment or link of conveyor chain |
| 13 | mid-section of 12 |
| 14 | topside of 12 |
| 15 | underside of 12 |
| 16a, 16b, 17a, 17b; 26, | hinge bearings |
| 27; 46, 47 | |
| 18, 28, 38 | border areas of the conveyor chain |
| 19 | hinge pins |
| 20, 20a, 20b, 20c | adjoining sides of segments 12, 12a, 12b, 12c |
| 21, 31 | flat transport surface of conveyor chain |
| 22 | sprocket |
| 23 | brush |
| 24 | joints between segments |
| 29, 39 | guide channels |
| 48 | median zone of conveyor chain |
| C | container |
| R | scanning rays |
| t | uniform thickness of 13 |
| T | transport direction of conveyor chain |
| X-X | plane (in side view) to which the scanning rays run parallel |
| α | slope angle of adjoining sides of segments |
| β | slope angle of plane of scanning rays |

## Claims

1. Conveyor chain (11; 30; 40) for a radiographic inspection system, comprising a multitude of rigid segments (12; 12a; 12b; 12c; 32) which extend over the entire width of the conveyor chain (11; 30; 40) and which in the lengthwise direction of the chain are connected together in a closed loop, wherein each segment (12; 12a; 12b; 12c; 32) is articulately coupled by connector elements to a following segment (12; 12a; 12b; 12c; 32) and a preceding segment (12; 12a; 12b; 12c; 32) in such a way that neighboring segments can flex against each other only from a substantially straight line to a convex angle in relation to the chain loop, so that the conveyor chain (11; 30; 40) is able to conform to conveyor rollers or sprockets (22), but is essentially resistant to flexing in the opposite direction, **characterized in that** the segments (12; 12a; 12b; 12c; 32) are configured at least in part as plates of a uniform thickness (t) and a uniform density and the connector elements are arranged on the segments (12; 12a; 12b; 12c; 32) in such a way that at least one continuous, materially homogenous transport area of uniform thickness and density is formed in the conveyor chain.

2. Conveyor chain (11; 30; 40) according to claim 1, **characterized in that** the connector elements are hinges (16a, 16b, 17a, 17b, 19; 26, 27; 46, 47).

3. Conveyor chain (11) according to claim 2, **characterized in that** said hinges (16a, 16b, 17a, 17b, 19) are arranged in outside border areas (18) of the segments (12) and said at least one continuous, materially homogenous area is formed in a median area (13) between said outside border areas (18).

4. Conveyor chain (30) according to claim 2, **characterized in that** said hinges (26, 27) are arranged in one outside border area (28) of the segments (32) while an opposite outside border area of the segments (32) is guided in a guide channel (29) and said at least one continuous, materially homogenous area is formed in a median area between said outside border area (28) and said guide channel (29).

5. Conveyor chain (40) according to claim 2, **characterized in that** said hinges (46, 47) are arranged in a median zone (48) of the segments while the outside border areas (38) of the segments are guided in guide channels (39) and two continuous, materially homogenous areas are formed on either side of said median zone (48), delimited at the outside border areas (38) by the guide channels (39).

6. Conveyor chain (11; 30; 40) according to one of the claims 1 to 5, wherein the conveyor chain (11; 30; 40) has a top side forming a flat transport surface (21; 31) and further has an underside (15), **characterized in that** said connector elements are arranged on the underside (15).

7. Conveyor chain (11; 30; 40) according to one of the claims 1 to 6, **characterized in that** the segments (12; 12a; 12b; 12c; 32) are made of a synthetic material which is transmittant to a high-energy electromagnetic radiation (R), specifically of acetal resin or polypropylene.

8. Conveyor chain (11; 30; 40) according to claim 7, **characterized in that** said high-energy electromagnetic radiation (R) is in the spectral range of X-rays.

9. Conveyor chain (11; 30; 40) according to one of the claims 1 to 8, **characterized in that** the segments (12; 12a; 12b; 12c; 32) overlap each other so that said materially homogeneous area of uniform thickness (t) and uniform density forms at least one continuous gapless band in the conveyor chain (11; 30; 40).

10. Conveyor chain (11; 30; 40) according to claim 9, **characterized in that** the segments (12; 12a) are of parallelogram-shaped cross-section relative to a plane that extends perpendicular to the transport surface and in the lengthwise direction of the conveyor chain, so that mutually adjoining sides (20; 20a) of neighboring segments (12; 12a) are biased at an oblique angle α relative to the lengthwise direction of the conveyor chain (11; 30; 40) and the segments (12; 12a) overlap each other in the lengthwise direction of the conveyor chain (11; 30; 40).

11. Conveyor chain (11; 30; 40) according to claim 9, **characterized in that** mutually adjoining sides (20b) of neighboring segments (12b) have complementary projecting and receding surface profiles, so that the segments (12b) overlap each other through a mutual engagement between said complementary surface profiles.

12. Conveyor chain (11; 30; 40) according to claim 11, **characterized in that** the mutually adjoining sides (20b) of neighboring segments (12b) have complementary profiles which are, respectively, convex-curved and concave-curved, so that the segments overlap each other through mutual engagement between said curved profiles.

13. Conveyor chain (11; 30; 40) according to one of the claims 1 to 8, **characterized in that** the segments (12c) are of rectangular cross-section relative to a plane that extends perpendicular to the transport surface and in the lengthwise direction of the conveyor chain, so that mutually adjoining sides (20c) of neighboring segments (12c) are orthogonal to the lengthwise direction of the conveyor chain (11; 30; 40).

14. Conveyor chain (11; 30; 40) according to one of the claims 1 to 13, **characterized in that** neighboring segments (12; 12a; 12b; 12c; 32) effectively overlap each other relative to a curtain of scanning radiation R which extends in a plane that is inclined relative to the transport surface at an angle β substantially smaller or larger than 90° and intersects the transport surface along a line that runs perpendicular to the lengthwise direction of the conveyor chain (11; 30; 40).

15. Radiographic inspection system comprising a conveyor chain (11; 30; 40) according to one of claims 1 to 14, wherein said conveyor chain is operable to transport objects under inspection through a curtain of electromagnetic radiation (R), **characterized in that** at least one radiation emitter is installed at a lateral position above the plane of the transport surface (21) of the conveyor and at least one radiation receiver is installed at a lateral position below the plane of the transport surface (21) of the conveyor chain.

16. Radiographic inspection system according to claim 15, **characterized in that** said curtain of electromagnetic radiation (R) extends in a plane that intersects the plane of the transport surface (21) along a line that runs perpendicular to the transport direction.

17. Radiographic inspection system according to claim 15 or 16, **characterized in that** two radiation emitters and two corresponding radiation receivers are installed at opposite sides of the conveyor.
